# EUROPEAN PATENT SPECIFICATION

(11) **EP 3 291 346 B1**
(45) Date of publication and mention of the grant of the patent: **11.12.2019**
(21) Application number: 17179169.2
(22) Date of filing: 30.06.2017
(51) Int. Cl.: H01M 8/04

(54) **FUEL-CELL POWER GENERATION SYSTEM**
BRENNSTOFFZELLENERZEUGUNGSSYSTEM
SYSTÈME DE PRODUCTION D'ÉNERGIE PAR PILE À COMBUSTIBLE

(30) Priority: 01.09.2016 JP 2016171058
(43) Date of publication of application: 07.03.2018
(73) Proprietor: Toshiba Energy Systems & Solutions Corporation, Saiwai-ku Kawasaki-shi Kanagawa (JP); KABUSHIKI KAISHA TOSHIBA, Minato-ku Tokyo (JP)
(72) Inventor: SAKATA Yoshiaki, Kanagawa 235-0017 (JP)
(74) Representative: Moreland, David

(56) References cited:
- EP-A1- 2 551 946
- EP-A1- 2 639 870
- US-A1- 2013 115 538

## Description

### TECHNICAL FIELD

Embodiments of the present disclosure relate to a fuel-cell power generation system.

### BACKGROUND ART

Fuel-cell power generation systems are systems that obtain electrical energy directly from fuel chemical energy by an electrochemical reaction utilizing hydrogen obtained from a fuel and oxygen in air. Since fuel-cell power generation systems generate power at a location where electricity is utilized, no loss is caused by electricity transmission. In addition, since fuel-cell power generation systems are capable of supplying hot water by heats at the time of power generation, the system can be utilized as co-generation systems by including a boiler for supplying hot water and a tank for reserving water.

Such fuel-cell power generation systems have a little amount of CO₂ exhaust, and have excellent silent characteristics and environmental characteristics. Hence, fuel-cell power generation systems are getting a high demand, and among those systems, FF-type fuel-cell power generation systems having an air ventilation device are widely utilized as systems installed in a building.

In the case of FF-type fuel-cell power generation systems, a plurality of casings, that houses therein fuel-cell body (hereinafter, referred to as FC units), is installed inside a building like a collective housing, and each FC unit is provided with an air ventilation device that forcibly supplies into the FC unit and exhausts air in the FC unit. An example air ventilation device is an air ventilation fan that controls the ventilation air volume at a constant output.

As an example specific piping structure, the FC unit is provided with an air inlet opening or an air inlet duct, and air is supplied to the interior of the FC unit via the air inlet opening or the air inlet duct. In addition, the air ventilation fan is disposed in the FC unit, and the exhaust side of the air ventilation fan is provided with an air exhaust duct. The upper end part of the air exhaust duct is located at the exterior of a building.

According to such fuel-cell power generation systems, when the air ventilation fan is actuated, the exhaust gas (mainly air) of the FC unit is exhausted to the exterior of the building via the air exhaust duct. When fuel-cell power generation systems are provided with a boiler for supplying hot water, the boiler and the FC unit are installed adjacent to each other. Hence, in general, the exhaust gas from the boiler is merged with the exhaust duct extended from the FC unit, and exhausted to the exterior of the building.

### Citation List

### Patent Document

Patent Document 1: Japan Patent No. 5089829 [0007a] EP 2639870 relates to a power generation system including a fuel cell system that includes a fuel cell and a case configured to store the fuel cell; a controller; a discharge passage through which an exhaust gas from the power generation system is discharged to the outside of the case; an air intake passage through which air is supplied to the power generation system; a clogging detector provided in at least a supply and exhaust mechanism or the case; and a ventilator configured to ventilate an inside of the case to discharge air from the case to the discharge passage, and the controller stops the operation of the power generation system when clogging of the discharge passage is detected based on information from the clogging detector while the power generation system is operating US 2013/115538 A1 relates to an integrated burner(boiler)/fuel cell system for stationary application, wherein a airflow detector detects the level of flow within the exhaust duct of the system. A control unit checks whether said measured flow is below or above a preset value.

### SUMMARY OF INVENTION

### TECHNICAL PROBLEM

In the case of FF-type fuel-cell power generation systems, depending on the installation location of the FC unit in the building, the length of the duct connected to the air ventilation device quite varies. Since conventional air ventilation devices control the ventilation air volume at a constant output, the actual ventilation air volume varies depending on the pressure loss due to the length of the duct. In addition, since the pressure loss of the duct increases as time advances, the ventilation air volume by the ventilation device may decrease due to such pressure loss.

Hence, according to conventional fuel-cell power generation systems, it is difficult for the ventilation device to achieve a desired ventilation air volume because of the difference in duct length and the increase in pressure loss. In particular, in the case of the piping structure in which the exhaust gas from the boiler is merged with the air exhaust duct connected to the FC unit, because the fuel burning status of the boiler changes, the ventilation air volume by the air ventilation device is likely to be unstable. Hence, it is quite difficult to maintain the ventilation air volume to be always equal to or greater than a certain value.

In fuel-cell power generation systems including the air ventilation device, an example simple scheme to cause the ventilation air volume by the air ventilation device to be equal to or greater than a certain value is to control the operation quantity given to the air ventilation device to be increased with a sufficient margin. Note that a "control to increase the operation amount given to the air ventilation device" means a control that increases at least either the air volume or the pressure of a fluid handled by the air ventilation device.

According to the above operation quantity increase control, however, since the sufficient margin is set, the operation quantity given to the air ventilation device is likely to be excessive, and the ventilation air volume by the air ventilation device excessively increases. When the ventilation air volume increases excessively, not only the power consumption by the air ventilation device increases unnecessarily, but an adverse effect may also occur to the burning in the boiler and the performance of the fuel cell.

An objective of the present disclosure is to provide a fuel-cell power generation system capable of ensuring a ventilation air volume to be equal to or greater than a certain value by storing an operation quantity of an air ventilation device that makes the ventilation air volume to be a predetermined threshold.

### SOLUTION TO PROBLEM

According to the invention, a fuel-cell power generation system is provided as recited in claim 1.

### BRIEF DESCRIPTION OF DRAWINGS

FIG. 1 is a block diagram for an example useful for understanding the invention;
FIG. 2 is an image view illustrating an overall structure according to the example of figure 1;
FIG. 3 is an action image view of an air ventilation fan according to the example of figure 1;; and
FIG. 4 is a block diagram for a first embodiment.

### DESCRIPTION OF EXAMPLES AND EMBODIMENTS

### []

### [Structure]

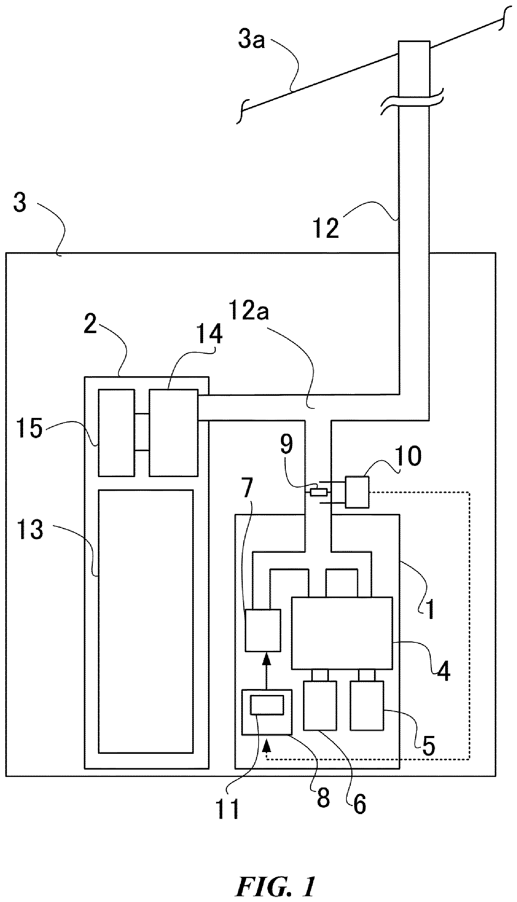

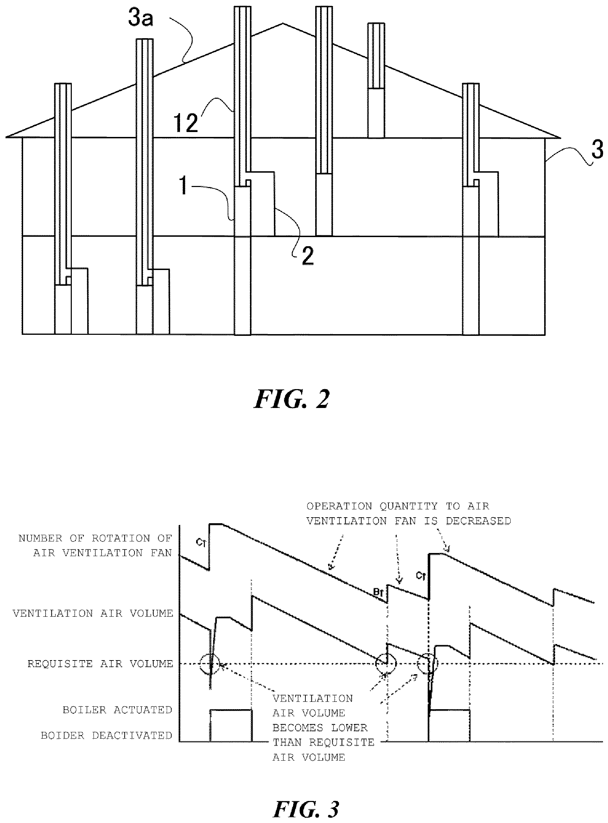

A structure according to an example useful for understanding the invention will be explained below with reference to FIGs. 1 to 3. This example is applied to an FF-type or FE-type fuel-cell power generation system including an air ventilation device. FIG. 1 is a block diagram for the example, FIG. 2 is an image view illustrating an overall structure according to the example of figure 1, and FIG. 3 is an action image view of an air ventilation fan according to the example of figure 1.

As illustrated in FIGs. 1 and 2, in a fuel-cell power generation system, an FC unit 1 and a hot-water storage unit 2 are installed adjacent to each other inside a building 3. As illustrated in FIG. 2, a plurality of the FC units 1 and a plurality of hot-water storage units 2 are installed at predetermined locations in the building 3. An air exhaust duct 12 is connected to the upper part of the FC unit 1 and that of the hot-water storage unit 2. The air exhaust duct 12 may be a dual-cylinder structure duct that has an air inlet duct and an air exhaust duct provided coaxially to each other. The dual-cylinder structure duct achieves a good space saving.

The hot-water storage unit 2 is a unit to supply hot water to a predetermined site in the building 3, and includes, for example, a water reserving tank 13, an auxiliary boiler 14, and a burning fan 15 for the boiler 14. The exhaust gas from the FC unit 1 and the boiler 14 are merged with the air exhaust duct 12, and are exhausted to the exterior via a roof 3a of the building 3. The reference numeral 12a in the figure indicates a merging part of the exhaust gas from the FC unit 1 and the boiler 14.

As illustrated in FIG. 1, an air-volume orifice 9 is installed at the upstream side of the FC unit 1 of the merging part 12a of the air exhaust duct 12. The air-volume orifice 9 obtains the ventilation air volume by the air ventilation device (an air ventilation fan 7 to be explained later) in this example based on the pressure difference between before and after. A pressure gauge 10 that measures the pressure before and after the air-volume orifice 9, that is, the upstream side and the downstream side of the air-volume orifice 9 is provided. The air-volume orifice 9 and the pressure gauge 10 serve as air-volume measuring device of the air ventilation fan 7.

The FC unit 1 is a casing that houses therein a fuel cell 4, a fuel-gas supplying device 5, an oxidizer-gas supplying device 6, the air ventilation fan 7 and a control device 8. In the fuel cell 4, the fuel gas is supplied to an anode during passing through a fuel-gas flow channel, while the oxidizer gas is supplied to a cathode during passing through an oxidizer-gas flow channel. In addition, when the fuel gas supplied to the anode and the oxidizer gas supplied to the cathode react with each other, electricity and heat are generated. The electricity generated by the fuel cell 4 is supplied to an external electricity load via, for example, a power controller, while the heat generated by the fuel cell 4 is utilized at the hot-water storage unit 2.

In the fuel cell 4, the fuel-gas supplying device 5 is connected to the inlet of the fuel-gas flow channel, and the oxidizer-gas supplying device 6 is connected to the inlet of the oxidizer-gas flow channel. The fuel-gas supplying device 5 supplies the air-volume of the fuel gas to the fuel cell 4, and includes, for example, devices such as a hydrogen generator and a hydrogen tank. The oxidizer-gas supplying device 6 supplies the air-volume of air that is the oxidizer gas to the fuel cell 4, and includes, for example, a fan, and a blower.

The air ventilation fan 7 is an air ventilation device capable of changing the ventilation air volume in the FC unit 1. When the air ventilation fan 7 is actuated, the gas inside the FC unit 1, mainly air, is exhausted to the exterior of the building 3 via the air exhaust duct 12, and the interior of the FC unit 1 is ventilated. The ventilation air volume by the air ventilation fan 7 is measured by the air-volume orifice 9 and the pressure gauge 10 installed at the air exhaust duct 12.

The control device 8 is a device that actuates the air ventilation fan 7 by giving a predetermined operation quantity to the air ventilation fan 7. The control device 8 includes, for example, an arithmetic processing unit like a CPU, and a memory unit that stores programs to perform various control actions. In addition, the control device 8 decreases, at a fixed interval or at an arbitrary timing, the operation quantity of the air ventilation fan 7 when, during the fuel-cell power generation system is in operation, the ventilation air volume measured by the air-volume orifice 9 or the pressure gauge 10, that are the air-volume measuring devices, is equal to or greater than a preset requisite air volume preset beforehand. The lower limit value when the operation quantity to the air ventilation fan 7 is decreased is a value the pressure by the ventilation air volume measured by the pressure gauge 10 is lower than the pressure by the preset requisite air volume.

In addition, in the case the control device 8 decreases the operation quantity of the air ventilation fan 7, when the pressure by the ventilation air volume measured by the pressure gauge 10 becomes lower than the pressure by the preset requisite air volume, the operation quantity to be given to the air ventilation fan 7 is increased by equal to or greater than a certain value. Hence, the control device 8 gives an operation quantity, that achieves the air volume equal to or greater than the requisite air volume, to the air ventilation fan 7.

The control device 8 includes an operation-quantity memory 11 that stores the requisite operation quantity. The requisite operation quantity stored in the operation-quantity memory 11 is an operation quantity of the air ventilation fan 7 that causes the ventilation air volume by the air ventilation fan 7 to be equal to or greater than the preset requisite air volume.

The operation-quantity memory 11 gradually increases the operation quantity the control device 8 gives to the air ventilation fan 7 at the time of factory acceptance test of the fuel-cell power generation system or at the time of initial activation including after installation or after maintenance of the fuel-cell power generation system, and during such increase, determines the above requisite operation quantity, and stores the determined requisite operation quantity. After the operation-quantity memory 11 stores the requisite operation quantity, the control device 8 calls the requisite operation quantity from the operation-quantity memory 11, gives, to the air ventilation fan 7, the operation quantity that is equal to or greater than the requisite operation quantity, and actuates the air ventilation fan 7.

Next, an explanation will be given of the structural component in the hot-water storage unit 2. The water reserving tank 13 is a tank that reserves hot water heated by utilizing heat at the time of power generation by the fuel cell 4. The installed water reserving tank 13 occupies the majority of the hot-water storage unit 2. The auxiliary boiler 14 and the burning fan 15 for the boiler 14 are installed at the upper part of the water reserving tank 13. The auxiliary boiler 14 heats the hot water flown from the water reserving tank 13 to a predetermined temperature. The fuel cell 4 and the boiler 14 may be actuated by the same fuel.

The burning fan 15 for the boiler 14 is air blowing device to send burning air to the boiler 14. The air blowing performance by the burning fan 15 is set so that the exhaust gas from the boiler 14 flowing the air exhaust duct 12 do not flow back towards the FC unit 1 side even if the boiler 14 is actuated while the air ventilation fan 7 is being actuated in the FC unit 1. This is to prevent the oxidizer-gas concentration in the fuel cell 4 from decreasing by the exhaust gas of the boiler 14 flowing into the FC unit 1.

### [Action and Effect]

The action and effect of the example of figure 1 are as follows.

### (Ensured Ventilation Air Volume)

According to the example of figure 1, the operation quantity given of the air ventilation fan 7 by the control device 8 is gradually increased at the time of factory acceptance test of the fuel-cell power generation system or at the time of initial activation including after installation or after maintenance for the fuel-cell power generation system, the requisite operation quantity is determined, and stored in the operation-quantity memory 11. That is, the requisite operation quantity of the air ventilation fan 7 to ensure the ventilation air volume that is equal to or greater than the requisite air volume is determined with reference to the initial activation state of the system at which no pressure loss increase over time by the air exhaust duct 12 is occurred.

When the operation-quantity memory 11 stores the requisite operation quantity for the air ventilation fan 7, the control device 8 calls the requisite operation quantity from the operation-quantity memory 11, and gives the operation quantity that is equal to or greater than the requisite operation quantity to the air ventilation fan 7 to actuate the air ventilation fan 7. Hence, the air ventilation fan 7 to which the operation quantity that is equal to or greater than the requisite operation quantity is given from the control device 8 can be actuated at the air-volume that is equal to or greater than the preset requisite air volume.

For example, a dotted line in the graph that is FIG. 3 is defined as the requisite air volume. In addition, in FIG. 3, the upper polygonal line in FIG. 3 indicates a change in number of rotation of the air ventilation fan 7, while the lower polygonal line indicates a change in ventilation air volume by the air ventilation fan 7. As illustrated in the graph that is FIG. 3, when, for example, the boiler 14 is actuated and the air-volume of the exhaust gas flowing the air exhaust duct 12 increases, the number of rotation of the air ventilation fan 7 decreases, and the ventilation air volume may become lower than the requisite air volume. At this time, since the control device 8 gives, to the air ventilation fan 7, the operation quantity that is equal to or greater than the requisite operation quantity, the number of rotation of the air ventilation fan 7 increases, the ventilation air volume by the air ventilation fan 7 increases, and thus the ventilation air volume by the air ventilation fan 7 exceeds the requisite air volume.

According to the example of figure 1, even if, the length of the air exhaust duct 12 connected to the air ventilation fan 7 varies depending on the difference in installation location of the FC unit 1 in the building 3, the ventilation air volume by the air ventilation fan 7 exceeds the requisite air volume, and a reduction in ventilation air volume by the air ventilation fan 7 is prevented. In addition, even if the pressure loss of the duct increases over time, the ventilation air volume by the air ventilation fan 7 exceeds the requisite air volume, and thus the ventilation air volume by the air ventilation fan 7 is prevented from becoming lower than the requisite air volume.

The exhaust gas from the boiler 14 is merged with the air exhaust duct 12 connected to the FC unit 1. According to such structure, depending on the burning state of the boiler 14, the ventilation air volume by the air ventilation fan 7 is likely to decrease. According to the present disclosure, however, since the control device 8 always gives the requisite operation quantity of the air ventilation fan 7, the air ventilation fan 7 always actuates at the air volume that is equal to or greater than the requisite air volume. Hence, the ventilation air volume by the air ventilation fan 7 is ensured to be equal to or greater than a certain value, and the system reliability increases.

### (Excessive Ventilation Air Volume Increase Prevention)

As explained above, when the ventilation air volume by the air ventilation fan 7 is excessively increased, not only the power consumption increases, but an adverse effect may be given to the burning by the boiler 14 and the performance of the fuel cell 4. Hence, the control device 8 according to example of figure 1 decreases, at a fixed interval or at an arbitrary timing, the operation quantity of the air ventilation fan 7 during the operation of the fuel-cell power generation system. That is, the pressure of the ventilation air volume measured by the pressure gauge 10 is forcibly decreased.

Next, only when the pressure of the ventilation air volume measured by the pressure gauge 10 becomes lower than the pressure of the requisite air volume, the control device 8 increases the operation quantity of the air ventilation fan 7 by equal to or greater than a certain value, and the requisite operation quantity that achieves the air volume that is equal to or greater than the requisite air volume is given to the air ventilation fan 7. Hence, the air ventilation fan 7 is capable of actuating at the ventilation air volume that exceeds the requisite air volume (see FIG. 3).

In the example of figure 1, during the operation of the fuel-cell power generation system, the operation quantity given to the air ventilation fan 7 from the control device 8 is purposefully decreased at a fixed interval or at an arbitrary timing, for checking the presence or absence of the excessive ventilation air volume. That is, in the example of figure 1, when the pressure of the ventilation air volume measured by the pressure gauge 10 does not become lower than the pressure of the preset requisite air volume, the reduction control for the operation quantity of the air ventilation fan 7 is maintained.

According to the example of figure 1, an occurrence of the excessive ventilation air volume is surely prevented. Hence, an excessive increase in ventilation air volume by the air ventilation fan 7 is prevented, and an excessive increase in ventilation air volume is prevented. Accordingly, an increase in power consumption by the air ventilation fan 7 is prevented. In addition, there is no occasion that the excessive ventilation air volume by the air ventilation fan 7 adversely effects the burning by the boiler 14 and the performance of the fuel cell 4.

### [First Embodiment]

### [Structure]

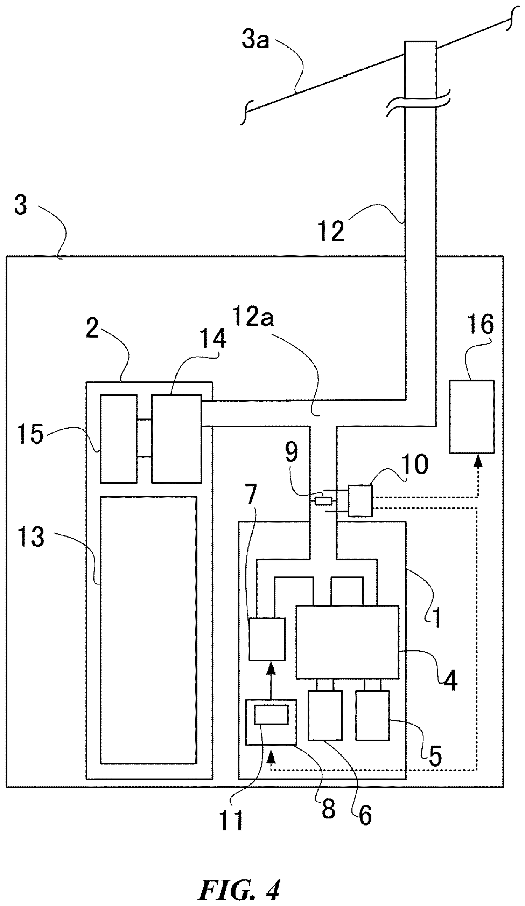

The structure according to the First embodiment is basically the same as that of the example of figure 1, and the same reference numeral is given to the same component and the explanation thereof will not be repeated. According to the first embodiment, as illustrated in FIG. 4, a diagnosis unit 16 for the pressure gauge 10 is provided.

At the time of activation of the fuel-cell power generation system or when the fuel-cell power generation system continues the operation for a certain time period, the control device 8 increases or decreases the operation quantity of the air ventilation fan 7. At this time, the diagnosis unit 16 checks whether or not the measurement result by the pressure gauge 10 increases or decreases in accordance with the operation quantity increased or decreased by the control device 8.

That is, when the measurement result by the pressure gauge 10 increases or decreases in accordance with the operation quantity increased or decreased by the control device 8, the diagnosis unit 16 gives a diagnosis that the pressure gauge 10 is normal. In addition, when the measurement result by the pressure gauge 10 does not increase or decrease in accordance with the operation quantity increased or decreased by the control device 8, the diagnosis unit 16 gives a diagnosis that the pressure gauge 10 has a defect.

### [Action and Effect]

### (Self-Diagnosis of Air-Volume Measuring Means)

According to the above first embodiment, the operation quantity given to the air ventilation fan 7 by the control device 8 is increased or decreased, and the diagnosis unit 16 checks whether or not the pressure of the ventilation air volume measured by the pressure gauge 10 increases or decreases in accordance with the increased or decreased operation quantity. According to such first embodiment that employs the diagnosis unit 16, a self-diagnosis on the defect of the pressure gauge 10 can be performed, and thus the system reliability is further improved.

### [Other Embodiments]

An embodiment of the present disclosure has been explained in this specification, but this embodiment is merely presented as an examples, and are not intended to limit the scope of the appended claims.

For example, the structure of the FC unit 1 and the hot-water storage unit 2, the type of the fuel cell 4, and the installation number thereof can be selected as appropriate. For example, in the fuel cell 4, the exhaust gas from the anode and the cathode may be exhausted, or the exhaust gas from the anode may once be returned to a burner of a reforming device, and the burner exhaust gas from the reforming device and the cathode exhaust gas may be merged and exhausted. In addition, the installation location of the FC unit 1 and the hot-water storage unit 2 in the building 3 can be changed as appropriate. The air exhaust duct 12 is not limited to a dual-cylinder structure duct, and the air inlet duct and the air exhaust duct may be provided separately.

The air ventilation device is not limited to the air exhaust fan 7 as long as it can ventilate the interior of the FC unit 1 and can change the ventilation air volume, and a blower, etc., may be applied. In addition, as for the installation location of the air ventilation device, the air ventilation device may be disposed not in the FC unit 1 but in the air exhaust duct 12. More specifically, the air ventilation device may be disposed at the upstream side or the downstream side of the merging part 12a of the air exhaust duct 12 extended from the FC unit 1 or the hot-water storage unit 2.

According to an embodiment, although the control device 8 is disposed in the FC unit 1, the control device 8 may be disposed in the hot-water storage unit 2, or the control device 8 may be disposed independently from the FC unit 1 and the hot-water storage unit 2. The control device 8 may control not only the action of the air ventilation fan 7 but also each devices in the FC unit 1 and the hot-water unit storage 2.

According to an embodiment during the fuel-cell power generation system is in operation, the control device 8 purposefully decreases the operation quantity given to the air ventilation fan 7 to forcibly decrease the ventilation air volume measured by the air-volume measuring device, but a structure in which the ventilation air volume measured by the air-volume measuring device naturally decreases is also acceptable.

When, for example, the ventilation air volume decreases due to any defect of the air ventilation fan 7, the control device 8 may detect this decrease in ventilation air volume, and increase the operation quantity of the air ventilation fan 7. According to an embodiment, even if the ventilation air volume by the air ventilation fan 7 rapidly decreases, this can be surely detected, and the decrease in the ventilation air volume can be prevented.

In addition, in the above embodiment, the timing at which the control device 8 increases the operation quantity of the air ventilation fan 7 by equal to or greater than a certain value may be other than the time point at which the ventilation air volume by the air ventilation fan 7 reaches the requisite air volume indicated by the dotted line in FIG. 3. When, for example, the ventilation air volume becomes close to the requisite air volume value in some level, the control device 8 may be set to increase the operation quantity of the air ventilation fan 7 by equal to or greater than the certain value, so that the air ventilation fan 7 is given with the operation quantity of the air ventilation fan 7 to be equal to or greater than the requisite air volume value. According to this embodiment, the effect of ensuring the ventilation air volume by the air ventilation fan 7 can be surely achieved.

The installation location of the air-volume measuring device is not limited to the interior of the air ventilation duct 12 but may be in the FC unit 1. In addition, as for the structure of the air-volume measuring device, in addition to the combination of the air-volume orifice 9 with the pressure gauge 10 as indicated in the first embodiment, a non-return valve instead of the air-volume orifice 9 may be installed at the outlet of the air ventilation device, and the pressure gauge 10 may be disposed at the upstream side or downstream side of this non-return valve, or an air-volume gauge may be applied instead of the combination of the air-volume orifice 9 or the non-return valve with the pressure gauge 10.

According to the embodiment in which the air-volume measuring device includes the non-return valve and the pressure gauge 10, since the installation of the air-volume orifice 9 that needs a devisal for installation can be eliminated, the installation workability can be improved. In addition, even if the gas flowing through the air exhaust duct 12 contains a large amount of moisture, when the non-return valve is applied, a measurement precision is not decreased due to the moisture, and the air-volume measurement precision is improved. Still further, by applying the non-return valve, the exhaust gas from the boiler 14 does not flow back the air exhaust duct 12 to the FC unit 1. Hence, the performance reduction of the fuel cell 4 in the FC unit 1 caused by the exhaust gas from the boiler 14 can be surely prevented.

## Claims

1. A fuel-cell power generation system comprising:
a fuel-cell unit (1) which has a casing;
a boiler (14) for supplying hot water; and
an air ventilation device (7) connected with an air exhaust duct (12) of the fuel-cell unit (1), wherein:
the air ventilation device (7) is capable of changing a ventilation air volume in the casing;
the air exhaust duct (12) is configured to discharge an exhaust gas from the casing and is connected to an outlet of the air ventilation device (7); and
an exhaust gas duct from the boiler (14) is merged with the air exhaust duct (12),
the system further comprising:
a control device (8) giving a requisite operation quantity to the air ventilation device (7) to set the ventilation air volume to be equal to or greater than a preset requisite air volume; and
an air-volume measuring device (10) for measuring the ventilation air volume;
a diagnosis unit (16) for the air-volume measuring device (10), the diagnosis unit (16) checking whether or not a measurement result by the air-volume measuring device (10) increases or decreases in accordance with the increased or decreased operation quantity when the control device (8) increases or decreases the operation quantity of the air ventilation device (7) at a time of activation of the fuel-cell power generation system or after the fuel-cell power generation system continues an operation for a certain time period,
wherein:
when the ventilation air volume measured by the air-volume measuring device (10) is lower than the requisite air volume during the fuel-cell power generation system is in operation, the control device gives, to the air ventilation device (7), the operation quantity that archives the air volume that is equal to or greater than the requisite air volume; and
when the ventilation air volume measured by the air-volume measuring device (10) is equal to or greater than the requisite air volume during the fuel-cell power generation system is in operation, the control device decreases, at an arbitrary timing, the operation quantity of the air ventilation device (7).

2. The fuel-cell power generation system according to claim 1, further comprising an operation-quantity memory storing the requisite operation quantity by the control device (8) gradually increasing the operation quantity given to the air ventilation device (7) at a time of factory acceptance test, or at an initial activation including after installation or after maintenance.

3. The fuel-cell power generation system according to any one of claims 1 or 2, wherein:
the air-volume measuring device (10) is installed in the air exhaust duct (12).

## Patentansprüche

1. Brennstoffzellen-Stromerzeugungssystem (1), Folgendes beinhaltend:
eine Brennstoffzelleneinheit (1), welche ein Gehäuse besitzt;
einen Heizkessel (14) zum Bereitstellen von heißem Wasser; und
eine Belüftungsvorrichtung (7), welche mit einem Luftabsaugkanal (12) der Brennstoffzelleneinheit (1) verbunden ist, wobei:
die Belüftungsvorrichtung (7) in der Lage ist, ein Belüftungsvolumen in dem Gehäuse zu ändern;
der Absaugkanal (12) konfiguriert ist, um ein Abgas von dem Gehäuse abzusaugen und mit einem Auslass der Belüftungsvorrichtung (7) verbunden ist; und
ein Abgaskanal vom Heizkessel (14) mit dem Luftabsaugkanal (12) zusammengeführt wird,
wobei das System zudem Folgendes beinhaltet:
eine Steuervorrichtung (8), welche der Belüftungsvorrichtung (7) eine erforderliche Betriebsmenge vorgibt, um das Belüftungsluftvolumen so einzustellen, dass es gleich einem voreingestellten erforderlichen Luftvolumen oder größer als dieses ist; und
eine Luftvolumen-Messvorrichtung (10) zum Messen des Belüftungsluftvolumens;
eine Diagnoseeinheit (16) für die Luftvolumen-Messvorrichtung (10), wobei die Diagnoseeinheit (16) überprüft, ob ein Messergebnis der Luftvolumen-Messvorrichtung (10) sich erhöht oder verringert in Einklang mit der erhöhten oder verringerten Betriebsmenge, wenn die Steuervorrichtung (8) die Betriebsmenge der Belüftungsvorrichtung (7) zu einem Zeitpunkt der Aktivierung des Brennstoffzellen-Stromerzeugungssystems erhöht oder verringert, oder nachdem das Brennstoffzellen-Stromerzeugungssystem einen Betrieb über einen bestimmten Zeitraum fortgesetzt hat,
wobei:
wenn das Belüftungsluftvolumen, welches durch die Luftvolumen-Messvorrichtung (10) gemessen wird, niedriger als das erforderliche Luftvolumen während des Betriebs des Brennstoffzellen-Stromerzeugungssystems ist, die Steuervorrichtung der Belüftungsvorrichtung (7) die Betriebsmenge vorgibt, welche das Luftvolumen archiviert, welches gleich dem erforderlichen Luftvolumen oder größer als dieses ist; und
wenn das durch die Luftvolumen-Messvorrichtung (10) gemessene Belüftungsluftvolumen gleich dem oder größer als das erforderliche Luftvolumen während des Betriebs des Brennstoffzellen-Stromerzeugungssystems ist, die Steuervorrichtung zu einem willkürlichen Zeitpunkt die Betriebsmenge der Belüftungsvorrichtung (7) verringert.

2. Brennstoffzellen-Stromerzeugungssystem nach Anspruch 1, zudem beinhaltend einen Betriebsmengenspeicher, welcher die erforderliche Betriebsmenge dadurch speichert, dass die Steuervorrichtung (8) die Betriebsmenge, welche der Belüftungsvorrichtung (7) zu einem Zeitpunkt des Werksabnahmetests vorgegeben wurde, graduell steigert, oder bei einer anfänglichen Aktivierung, darunter auch nach der Installation oder nach einer Wartung.

3. Brennstoffzellen-Stromerzeugungssystem nach einem der Ansprüche 1 oder 2, bei welchem:
die Luftvolumen-Messvorrichtung (10) in dem Luftabsaugkanal (12) installiert ist.

## Revendications

1. Système de production d'énergie par pile à combustible, comprenant :
une unité de pile à combustible (1) dotée d'un boîtier,
une chaudière (14) pour alimenter de l'eau chaude, et
un dispositif de ventilation d'air (7) connecté à un conduit d'échappement d'air (12) de l'unité de pile à combustible (1), dans lequel
le dispositif de ventilation d'air (7) est capable de modifier un débit d'air de ventilation dans le boîtier,
le conduit d'échappement d'air (12) est configuré pour évacuer un gaz d'échappement à partir du boîtier et est connecté à une sortie du dispositif de ventilation d'air (7), et
un conduit de gaz d'échappement à partir de la chaudière (14) est regroupé avec le conduit d'échappement d'air (12),
le système comprenant en outre :
un dispositif de commande (8) transmettant une quantité d'opération requise au dispositif de ventilation d'air (7) pour régler le débit d'air de ventilation de façon à ce qu'il soit égal ou supérieur à un débit d'air requis préréglé, et
un dispositif de mesure de débit d'air (10) pour mesurer le débit d'air de ventilation,
un module de diagnostic (16) pour le dispositif de mesure de débit d'air (10), le module de diagnostic (16) vérifiant si oui ou non un résultat de mesure par le dispositif de mesure de débit d'air (10) augmente ou diminue conformément à la quantité d'opération augmentée ou diminuée lorsque le dispositif de commande (8) augmente ou diminue la quantité d'opération du dispositif de ventilation d'air (7) à un moment d'activation du système de production d'énergie par pile à combustible ou après que le système de production d'énergie par pile à combustible continue à fonctionner pendant une certaine période,
dans lequel :
lorsque le débit d'air de ventilation mesuré par le dispositif de mesure de débit d'air (10) est inférieur au débit d'air requis pendant le fonctionnement du système de production d'énergie par pile à combustible, le dispositif de commande transmet au dispositif de ventilation d'air (7) la quantité d'opération qui archive le débit d'air qui est égal ou supérieur au débit d'air requis, et
lorsque le débit d'air de ventilation mesuré par le dispositif de mesure de débit d'air (10) est égal ou supérieur au débit d'air requis pendant le fonctionnement du système de production d'énergie par pile à combustible, le dispositif de commande diminue, à un moment arbitraire, la quantité d'opération du dispositif de ventilation d'air (7).

2. Système de production d'énergie par pile à combustible selon la revendication 1, comprenant en outre une mémoire de quantité d'opération stockant la quantité d'opération requise par le dispositif de commande (8), qui augmente progressivement la quantité d'opération transmise au dispositif de ventilation d'air (7) au moment d'un test d'acceptation usine ou à une mise en service initiale, après l'installation ou après une maintenance.

3. Système de production d'énergie par pile à combustible selon l'une quelconque des revendications 1 ou 2, dans lequel le dispositif de mesure de débit d'air (10) est installé dans le conduit d'échappement d'air (12).
